Europäisches Patentamt

**European Patent Office**

**Office européen des brevets**

(19)

(11) Publication number: **0 186 964**
A1

# EUROPEAN PATENT APPLICATION

(12)

(21) Application number: **85308486.1**

(22) Date of filing: **21.11.85**

(51) Int. Cl.⁴: **G 01 N 27/90**

(30) Priority: **23.11.84 US 674446**

(43) Date of publication of application: **09.07.86**
**Bulletin 86/28**

(84) Designated Contracting States: **DE FR IT**

(71) Applicant: **THE BABCOCK & WILCOX COMPANY,**
**1010 Common Street P.O. Box 60035, New Orleans**
**Louisiana 70160 (US)**

(72) Inventor: **Abell, Gary Edward, 150 Bedford Springs Road,**
**Lynchburg VA 24502 (US)**

(74) Representative: **Cotter, Ivan John et al, D. YOUNG &**
**CO. 10 Staple Inn, London WC1V 7RD (GB)**

(54) **Eddy current probes for detecting faults in structures and methods of detecting such faults.**

(57) An eddy current probe (10) comprises at least two juxtaposed coils (30, 32) lying in a first plane (28) and at least two juxtaposed coils (34, 36) lying in a second plane (38) spaced from and parallel to the first plane (28). The juxtaposed coils (30, 32 and 34, 36) in each plane (28, 38) are wound and provided with electrical energy in a manner so that the electromagnetic fields generated by the coils in each plane tend to cancel each other out. The coils (30, 32) of one plane (28) are angularly displaced by 90° with respect to the coils (34, 36) of the other plane (38) so that a determination of a circumferentially asymmetric fault (44) in a tube (40) can be detected, regardless of its position, while circumferentially symmetrical structures (42) have no effect on signals from the coils (30, 32, 34, 36).

# EDDY CURRENT PROBES FOR DETECTING FAULTS IN STRUCTURES AND METHODS OF DETECTING SUCH FAULTS

This invention relates to eddy current probes for detecting faults in structures and to methods of detecting such faults.

It is known to inspect axially symmetrical structures such as heat exchanger tubing for structural degradation by using eddy current technology. This generally involves the use of one or more moving eddy current test coils which are moved through the length of the heat exchanger tube to be inspected. These eddy current test coils are energised at one or more preselected frequencies that will best detect and quantify tube degradation on either the inside or outside surface of the heat exchanger tube. The eddy current signal responses from the heat exchanger tubing are compared to eddy current signal responses from a calibration tube of similar size and material with artificial discontinuities machined into the tube wall.

It is also known to utilise an eddy current probe having two or more coils at a selected relationship to each other, for determining cracks or other defects in more generalized structures. See for example US Patent No. US-A-3 495 166 (Lorenzi et al) which shows the use of two crossed coils for detecting flaws in the surface of a ferrous or non-ferrous material.

US Patent No. US-A-3 843 923 (de Vries et al) discloses a well pipe joint locator which utilises a ring magnet and two sets of Hall detectors surrounding the pipe.

US Patent No. US-A-2 810 882 (Walker) discloses the use of a pair of D-shaped coils mounted in one plane for use in measuring saturation magentisation of small ferromagnetic specimens.

According to one aspect of the invention there is provided an eddy current probe for detecting faults in structures, the probe comprising at least two coils arranged to receive electrical energy so as to produce electromagnetic fields;

characterised in that:

the at least two coils are juxtaposed and lying in a first plane and are wound so that, when the coils are supplied with electrical energy, they produce electromagnetic fields which oppose each other; and

at least two further juxtaposed coils lie in a second plane and are wound so that, when supplied with electrical energy, they produce electromagnetic fields which oppose each other, the second plane being axially spaced from and parallel to the first plane and the juxtaposed coils of the second plane being angularly displaced in the second plane by an angle with respect to the juxtaposed coils in the first plane;

whereby asymmetrical faults in axially symmetrical structures can be detected.

According to another aspect of the invention there is provided a method of detecting a fault in a structure, the method comprising activating two coils to produce electromagnetic fields;

characterised in that:

the two coils are juxtaposed and lying in a first plane and are activated with equal energy in opposite directions to produce opposing electromagnetic fields; and

two additional juxtaposed coils lying in a second plane are activated with equal electrical energy in opposite directions to produce opposing electromagnetic fields, the two additional juxtaposed coils being angularly displaced by $90^\circ$ with respect to the first-mentioned juxtaposed coils;

whereby circumferentially asymmetrical faults in a tube through which the coils are passed produce unequal response in the juxtaposed coils of at least one of the planes.

An eddy current probe and method embodying the invention and described hereinbelow is particularly sensitive to circumferentially asymmetrical flaws in tubes, while being relatively insensitive to circumferentially symmetrical conditions such as uniform radial dents, tube sheets, structural expansions, drilled support plates and the like. These circumferentially symmetrical conditions are generally normal conditions which only interfere with signals meant to indicate asymmetrical flaws such as cracks in or breeches through the tube.

During a fault detecting operation, the probe is pulled axially through a tube at a normal inspection rate. No part of the tube need be rotated as is sometimes used in prior art eddy current probes for avoiding the effects of axially symmetrical structures. Thus, the additional time and expense necessary when utilising rotating coils is avoided.

The coils of the eddy current probe are electrically energised to induce an electromagnetic field in the heat exchanger tubing. Since alternating current is used to energise the coils, an alternating electromagnetic field in the heat exchanger tubing creates eddy currents in conductive materials of the tubing. Eddy currents are also generated in integral or connected parts of the heat exchanger such as tube sheets, tube support plates and tube expansions. According to the particular arrangement of coils, however, the effects of these axially symmetrical structures are minimised.

The preferred embodiment of the present invention is particularly suited to sense the presence of circumferentially asymmetrical flaws in the tubing, in the area of these known circumferentially symmetrical structures. In prior art techniques, these areas were particularly difficult to examine due to the presence of high noise signals in these areas. In other words, the axially symmetrical normal structures mask the signals, in the prior art technique, which are meant to indicate the presence of a degradation or defect in the tubing.

In the preferred embodiment of the invention, the coils in one plane are angularly displaced by $90^{\circ}$ with respect to the coils in the other plane in order to ensure that the entire circumference of the structure is examined. The two coils in each plane are diametrically opposed to each other so as further to ensure that their electromagnetic effects are cancelled.

The preferred method includes the activation of the diametrically opposed coils in each plane or set to cancel their electromagnetic effect on the tube walls and surrounding structure. A localised crack or hole is detected by observing that the response from one coil in one set is different from the response of the diametrically opposed coil in that set. This effect is verified when the second set of coils passes the localised crack or hole. Circumferentially or axially symmetrical structures have no effect on the response of the two sets of coils due to the fact that the coils in each set are activated and oriented to cancel each other's influence.

The preferred eddy current probe is simple in design, rugged in construction and economical to manufacture, and the preferred fault detecting method is economical and convenient to practice compared with prior art eddy current techniques.

4

0186964

The invention will now be further described, by way of illustrative and non-limiting example, with reference to the accompanying drawings, in which:

Figure 1 is a longitudinal sectional view of a section of tubing to be examined with an eddy current probe according to an embodiment of the present invention shown within the tubing;

Figure 2 is a longitudinal sectional view of the probe of Figure 1;

Figure 3 is a view of the probe taken along lines 3-3 of Figure 1; and

Figure 4 is a perspective view of the probe of Figures 1 to 3 in a tube section to be tested, with portions cut away for clarity.

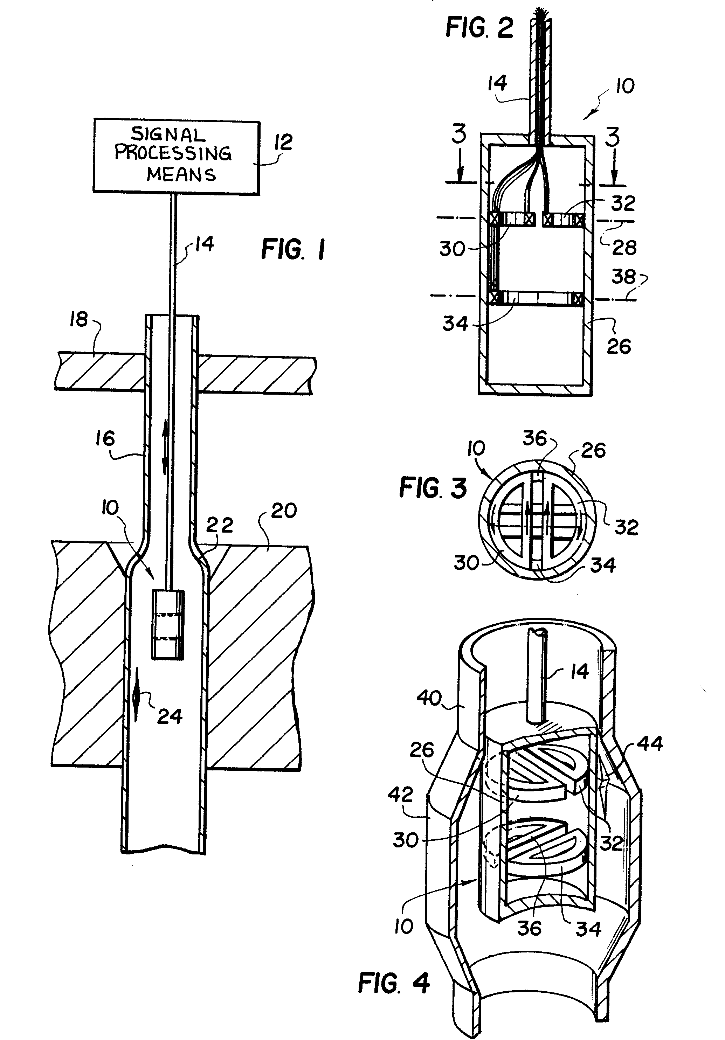

Referring to the drawings and in particular to Figure 1, an eddy current probe 10 includes a plurality of coils which are supplied with electrical energy and whose response is measured by a signal processing means 12 which is shown only schematically in Figure 1. The signal processing means 12 includes an electrical power supply for activating the coils at a selected frequency, and signal detecting equipment for detecting the response of the coils, in accordance with known eddy current techniques. Since the present description is drawn primarily to the use and structure embodied in the probe 10, further details of the signal processing means 12 will not be given here.

As shown in Figure 1, the probe 10 is supported and can be moved by a connector 14 which is for example a tube or cable for interconnecting the probe 10 to the signal processing means 12. The signal processing means 12 may also include suitable equipment for moving the probe 10 at a selected rate through a structure to be examined.

In Figure 1, the structure to be examined is a heat exchanger tube 16 which passes through a support plate 18 and is welded to a tube sheet 20. In the area where the heat exchanger tube 16 enters the tube sheet 20, it includes an enlarged portion 22. As with the support plate 18 and the tube sheet 20, the enlarged portion 22 is axially or circumferentially symmetrical.

The tube 16 is shown to have a hole or other fault 24 in the area of the tube sheet 20. The fault 24 is circumferentially asymmetrical.

The probe 10, as will be explained later, is specially designed to sense the presence of asymmetrical faults such as the fault 24, and to be virtually unaffected by axially symmetrical variations in the tube or its surroundings, such as the support plate 18, the tube sheet 20 and the enlarged portion 22.

Figures 2 and 3 show the probe 10 in greater detail. The probe 10 includes a cylindrical enclosure or frame 26, preferably made of nonmagnetic material. The frame 26 is supported by the tube or cable 14.

In a first plane 28, two juxtaposed coils 30,32 are provided which, as shown in Figure 3, are wound in opposite directions so that, when they are activated simultaneously by electric power, they produce opposing magnetic fields which tend to cancel each other out.

A second set of coils 34,36, which are also juxtaposed with respect to each other, lie in a second plane 38 which is axially spaced from and parallel to the first plane 28. The structure, positioning and windings of the second set of coils 34,36 are identical to those of the first set of coils 30,32 except that the second set of coils 34,36 are angularly displaced by 90$^{\circ}$ with respect to the first set of coils 30,32.

As also shown in Figure 3, the coils 30,32,34,36 are each D-shaped with the straight legs of each D-shaped coil being adjacent its juxtaposed coil in its common plane. In this way, both sets of coils 30,32 and 34,36 form generally circular configurations, well adapted to the circular cross-section of a tube or other axially symmetrical structure to be examined.

Figure 4 illustrates how the probe 10 can be lowered to pass an enlargement 42 in a tube 40. As the coil sets 34,36 and 30,32 pass a crack or breech 44 in the tube 40, the detected signals from the coil sets will reflect the asymmetric crack or breech 44 despite the presence of the enlargement 42.

6

0186964

## CLAIMS

1. An eddy current probe for detecting faults in structures, the probe (10) comprising at least two coils (30,32) arranged to receive electrical energy so as to produce electromagnetic fields;

characterised in that:

the at least two coils (30,32) are juxtaposed and lying in a first plane (28) and are wound so that, when the coils (30,32) are supplied with electrical energy, they produce electromagnetic fields which oppose each other; and

at least two further juxtaposed coils (34,36) lie in a second plane (38) and are wound so that, when supplied with electrical energy, they produce electromagnetic fields which oppose each other, the second plane (38) being axially spaced from and parallel to the first plane (28) and the juxtaposed coils (34,36) of the second plane (38) being angularly displaced in the second plane (38) by an angle with respect to the juxtaposed coils (30,32) in the first plane (28);

whereby asymmetrical faults (24) in axially symmetrical structures (16) can be detected.

2. A probe according to claim 1, wherein the angular displacement between the juxtaposed coils (30,32 and 34,36) in the first and second planes (28,38) is $90^{\circ}$.

3. A probe according to claim 1 or claim 2, wherein only two coils (30,32) are provided in the first plane (28) and only two coils (34,36) are provided in the second plane (38), each of the coils (30,32,34,36) having a D-shape with the juxtaposed coils in each plane (28,38) diametrically opposing each other.

4. A probe according to claim 3, wherein each of the D-shaped coils (30,32,34,36) has a straight leg which is adjacent a straight leg of a juxtaposed coil in the respective plane (28,38).

5. A probe according to claim 4, including a cylindrical frame (26) for supporting the coils (30,32,34,36) in the first and second planes (28,38), the frame (26) being made of non-magnetisable material, and a connector (14) connected to one end of the frame (26) for moving the frame in a direction parallel to the spacing between the first and second planes (28,38).

6.    A method of detecting a fault in a structure, the method comprising activating two coils (30,32) to produce electromagnetic fields;

characterised in that:

the two coils (30,32) are juxtaposed and lying in a first plane (28) and are activated with equal energy in opposite directions to produce opposing electromagnetic fields; and

two additional juxtaposed coils (34,36) lying in a second plane (38) are activated with equal electrical energy in opposite directions to produce opposing electromagnetic fields, the two additional juxtaposed coils (34,36) being angularly displaced by 90° with respect to the first-mentioned juxtaposed coils (30,32);

whereby circumferentially asymmetrical faults (24) in a tube (16) through which the coils (30,32,34,36) are passed produce unequal response in the juxtaposed coils (30,32 and 34,36) of at least one of the planes (28,38).

SIGNAL
PROCESSING
MEANS

FIG. I

FIG. 2

FIG. 3

FIG. 4

0186964

# EUROPEAN SEARCH REPORT

0186964

Application number

EP 85 30 8486

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CA-A-1 014 226 (V.S. CECCO et al.) <br> * pages 1,2; claims * | 1 | G 01 N 27/90 |
| A | DE-B-2 817 574 (KRAFTWERK UNION AG) <br> * column 1, lines 39-53; column 2, lines 25-45; claim 1 * | 1 | |
| A,P | EP-A-0 152 687 (BABCOCK & WILCOX CO.) <br> * pages 1,2 * | 1 | |
| A | DE-A-2 635 537 (C.E.A.) <br> * pages 2,3 * | 1,6 | |
| A | DE-B-1 648 626 (MAGNAFLUX CORP.) <br> * column 1, lines 45-55; column 2, lines 31-61; column 3, lines 1-10; & US - A - 34 95166 (Cat. D,A) * | 1 | TECHNICAL FIELDS SEARCHED (Int. Cl.4) <br><br> G 01 N 27/00 <br> G 01 M 3/00 <br> G 21 C 17/00 <br> F 22 B 37/00 |

The present search report has been drawn up for all claims

| Place of search | Date of completion of the search | Examiner |
|---|---|---|
| BERLIN | 17-02-1986 | BRISON O.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82